# EUROPEAN PATENT APPLICATION

(11) **EP 2 679 362 A2**
(43) Date of publication of application: **01.01.2014**
(21) Application number: 13172070.8
(22) Date of filing: 14.06.2013
(51) Int. Cl.: B28B 11/12, B28B 17/00

(54) **Method for manufacturing ceramic honeycomb structure**

(30) Priority: 27.06.2012 JP 2012144234; 17.05.2013 JP 2013105647
(71) Applicant: NGK Insulators, Ltd., Nagoya-city, Aichi 467-8530 (JP)
(72) Inventor: Kato, Shigeki, Nagoya-city, Aichi 467-8530 (JP)
(74) Representative: Naylor, Matthew John

(57) **Abstract**

There is provided a method for manufacturing a ceramic honeycomb structure capable of enhancing production efficiency by reducing a need for offline inspection; and including a shape verification step A of measuring an outer shape of a ceramic honeycomb dried body 50 having partition walls 51 defining cells 52 extending from one end face 61 to another end face 62, to remove the ceramic honeycomb dried body 50 which does not satisfy specified conditions; a finishing step B of subjecting the ceramic honeycomb dried body 50 satisfying the specified conditions to finish processing so that a length in a direction L from one end face to another end face becomes a finished size, to obtain a finished ceramic honeycomb dried body 70; and a firing step C of firing the finished ceramic honeycomb dried body 70 to obtain the ceramic honeycomb structure 100.

## Description

The present application is an application based on JP-2012-144234 filed on 06/27/2012 and JP-2013-105647 filed on 05/17/2013 with the Japanese Patent Office, the entire contents of which are incorporated herein by reference.

### BACKGROUND OF THE INVENTION

### Field of the Invention

The present invention relates to a method for manufacturing a ceramic honeycomb structure. More particularly, it relates to a method for manufacturing a ceramic honeycomb structure capable of enhancing production efficiency by reducing a need for an offline inspection.

### Background Art

In various fields such as chemistry, electric power, iron and steel, a honeycomb structure made of a ceramic material (a ceramic honeycomb structure) is utilized as a support for a catalyst device to be used for environmental protection, recovery of specific substances and the like. Moreover, a ceramic honeycomb structure is also used as a filter for purifying an exhaust gas. Such a ceramic honeycomb structure exhibits excellent heat resistance and corrosion resistance, and is utilized in various use applications as described above. The honeycomb structure is a structure having partition walls defining a plurality of cells extending from one end face to another end face to form through channels of a fluid. Hereinafter, a direction from the one end face to another end face may be referred to as an axial direction.

Heretofore, the honeycomb structure has been manufactured by the following method. Firstly, a kneaded clay including a forming raw material is formed into a honeycomb-like shape to obtain a honeycomb formed body. The honeycomb formed body is a cylindrical body in which a plural number of cells extending from the one end face to another end face are defined by the partition walls. This honeycomb formed body is cut so that a length of the honeycomb formed body in the above axial direction is larger than a length as a finished size. Next, the honeycomb formed body to be cut is dried to obtain the honeycomb dried body. Next, finish processing is performed so that the length of the honeycomb dried body in the axial direction becomes the finished size, to obtain "the finished honeycomb dried body". Next, a sampling dimensional inspection is performed in order to check the distortion of an outer shape of "the finished honeycomb dried body". In the sampling dimensional inspection, "the finished honeycomb dried body" in which the outer shape is distorted beyond the scope of an allowable range (specified conditions) fails, and is removed from a production line. Furthermore, a total dimensional inspection (a total inspection for a failed lot) is performed to a lot in which the failed finished honeycomb dried body (e.g., several hundred of "finished honeycomb dried bodies" placed on the same pallet) is detected, to remove the failed body. Next, "the finished honeycomb dried body" is fired to obtain a honeycomb structure (see, e.g., Patent Document 1). Moreover, as to the honeycomb structure manufactured by such a method, the inspection as to whether the outer size thereof satisfies a size tolerance (a product standard) of the finished size is performed, and the structure which has passed the inspection is shipped out as a product.

[Patent Document 1] JP-A-2002-046856

### SUMMARY OF THE INVENTION

When a honeycomb structure is prepared by the above method, "a total inspection" is usually performed offline (taking the dried bodies off from a production line). And, since "the total inspection" is performed to all "finished honeycomb dried bodies" of the same lot as a lot which has failed in a sampling dimensional inspection, it has been necessary to perform the inspection to a large number of honeycomb structures offline manually. Therefore, production efficiency may be reduced.

The present invention has been developed in view of the above-mentioned problem. According to the present invention, there is provided a method for manufacturing a ceramic honeycomb structure capable of enhancing productivity by reducing a need for an offline inspection.

According to the present invention, there is provided a method for manufacturing a ceramic honeycomb structure as follows.

[1] A method for manufacturing a ceramic honeycomb structure including a shape verification step of measuring an outer shape of a ceramic honeycomb dried body in which a plurality of cells extending from one end face to another end face are defined by partition walls, to remove the ceramic honeycomb dried body which does not satisfy specified conditions; a finishing step of subjecting the ceramic honeycomb dried body satisfying the specified conditions to finish processing so that a length in a direction from the one end face to another end face becomes a finished size, to obtain a finished ceramic honeycomb dried body; and a firing step of firing the finished ceramic honeycomb dried body to obtain the ceramic honeycomb structure.

[2] A method for manufacturing a ceramic honeycomb structure according to [1], wherein a measurement of the outer shape in the shape verification step is performed by measuring a contour in a circumferential direction including at least three measurement start positions apart from each other in the direction from the one end face to another end face and located on a peripheral surface of the ceramic honeycomb dried body.

[3] A method for manufacturing a ceramic honeycomb structure according to [2], wherein the contour is measured by placing the ceramic honeycomb dried body on a measurement table so that the one end face is a bottom face.

[4] A method for manufacturing a ceramic honeycomb structure according to [3], wherein spacers are arranged in at least three positions between the ceramic honeycomb dried body and the measurement table.

[5] A method for manufacturing a ceramic honeycomb structure according to [3] or [4], wherein a height difference of an inclination of the bottom face of the ceramic honeycomb dried body with respect to a horizontal plane is 4 mm or less at the time of placing the ceramic honeycomb dried body on the measurement table.

[6] A method for manufacturing a ceramic honeycomb structure according to any one of [2] to [5], wherein the contour is measured by a reflective non-contact laser displacement meter.

[7] A method for manufacturing a ceramic honeycomb structure according to any one of [1] to [6], wherein a temperature of the ceramic honeycomb dried body at the time of measuring the outer shape is from 20 to 150°C.

[8] A method for manufacturing a ceramic honeycomb structure according to any one of [1] to [7], wherein the ceramic honeycomb dried body has an undulation on a peripheral surface.

[9] A method for manufacturing a ceramic honeycomb structure according to any one of [1] to [8], wherein a size of outer diameter of the ceramic honeycomb dried body is 100 mm or more.

[10] A method for manufacturing a ceramic honeycomb structure according to any one of [1] to [9], wherein the ceramic honeycomb dried body is made of a forming raw material including at least one selected from a group consisting of cordierite, silicon carbide, and alumina.

[11] A method for manufacturing a ceramic honeycomb structure according to any one of [1] to [10], further including a plugging step of filling a plugging material into ends of the cells of the finished ceramic honeycomb dried body or the ceramic honeycomb structure.

According to a method for manufacturing a ceramic honeycomb structure of the present invention, in a shape verification step, a ceramic honeycomb dried body which does not satisfy "specified conditions of an outer shape" is removed, and hence it is not necessary to perform "a sampling dimensional inspection". Therefore, production efficiency enhances. Moreover, even if "the sampling dimensional inspection" is performed, since the ceramic honeycomb dried bodies which do not satisfy "the specified conditions of the outer shapes" are removed, it is possible to omit "a total inspection for the failed lot" or, at least, to make a percentage of the total inspection extraordinary small.

### BRIEF DESCRIPTION OF THE DRAWINGS

Fig. 1 is a perspective view schematically showing a process to form a ceramic honeycomb structure in one embodiment of a method for manufacturing the ceramic honeycomb structure of the present invention; and
Fig. 2 is a perspective view schematically showing an example of a measuring method of an outer shape in a shape verification step.

### EMBODIMENTS FOR CARRYING OUT THE INVENITON

Next, an embodiment for carrying out the present invention will be described in detail with reference to the drawings. It should be understood that the present invention is not limited to the following embodiment and that design change, improvement and the like are suitably added on the basis of ordinary knowledge of a person skilled in the art without departing from the gist of the present invention.

### (1) Method for Manufacturing Ceramic Honeycomb Structure:

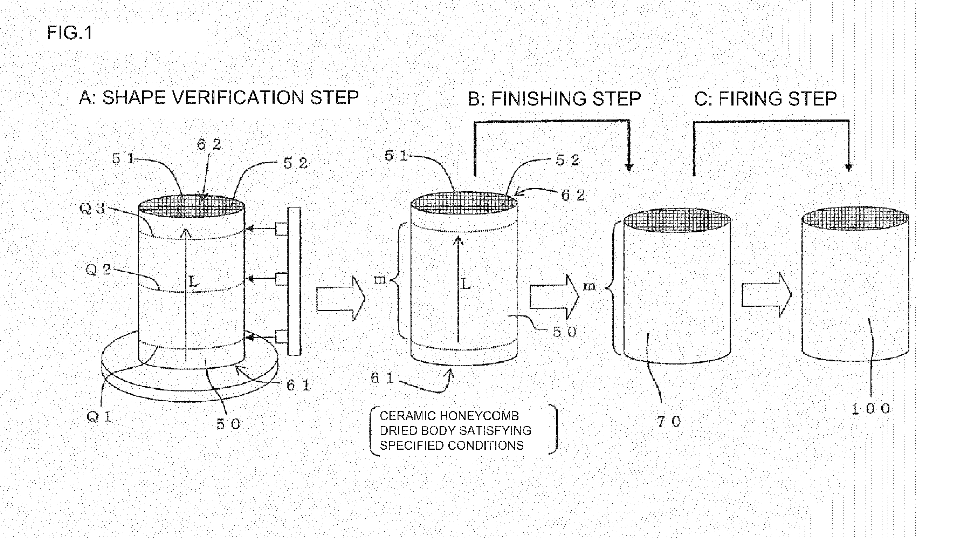

One embodiment of a method for manufacturing a ceramic honeycomb structure of the present invention is a method for manufacturing a ceramic honeycomb structure including a shape verification step A, a finishing step B, and a firing step C as shown in Fig. 1. Fig. 1 is a perspective view schematically showing a process to form the ceramic honeycomb structure in the one embodiment of the method for manufacturing the ceramic honeycomb structure of the present invention. The shape verification step A is a step of measuring an outer shape of a ceramic honeycomb dried body 50 to remove the ceramic honeycomb dried body 50 which does not satisfy specified conditions. The finishing step B is a step of subjecting the ceramic honeycomb dried body 50 satisfying the specified conditions to finish processing so that a length in "a direction L from one end face 61 to another end face 62" becomes a finished size m, to obtain a finished ceramic honeycomb dried body 70. The ceramic honeycomb dried body 50 is the body in which a plural number of cells 52 extending from the one end face 61 to another end face 62 are defined by partition walls 51. The ceramic honeycomb dried body 50 preferably has a tubular shape (e.g., a cylindrical shape, a tubular shape with an elliptic bottom surface, a tubular shape with a polygonal bottom surface, or the like). The firing step C is a step of firing the finished ceramic honeycomb dried body 70 obtained in the finishing step B, to obtain a ceramic honeycomb structure 100. Hereinafter, the ceramic honeycomb dried body 50 may simply be referred to "the honeycomb dried body 50". The finished ceramic honeycomb dried body 70 may simply be referred to "the finished honeycomb dried body 70". The ceramic honeycomb structure 100 may simply be referred to "the honeycomb structure 100".

According to the method for manufacturing the ceramic honeycomb structure of the present invention, in the shape verification step, the ceramic honeycomb dried body which does not satisfy "the specified conditions of the outer shape" is removed, and hence it is not necessary to perform "a sampling dimensional inspection". Therefore, production efficiency enhances. Moreover, even if "the sampling dimensional inspection" is performed, since the ceramic honeycomb dried bodies which do not satisfy "the specified conditions of the outer shapes" are removed, it is not necessary to perform "a total inspection for a failed lot". It is to be noted that, heretofore, when the ceramic honeycomb dried body which does not satisfy the specified conditions is identified in "the sampling dimensional inspection", the similar inspection to the sampling dimensional inspection has been performed as to a total lot constituting of the same lot to which the failed ceramic honeycomb dried body belongs, in a case that such a failed ceramic honeycomb dried body was observed. "The shape verification step" can automatically and continuously be performed online (on a production line), whereas "the total inspection for the failed lot" needs to be manually performed offline in a state of taking the dried bodies off from a production line. Since "the shape verification step" of the present invention can automatically and continuously be performed online (on a production line), shape verification can effectively be performed. In contrast, because there is a state in which "the total inspection for the failed lot" performed between a independent cutting step and firing step is separated from the both steps, the total inspection can not be on an automatic inspection line (i.e., on an offline), thereby a total inspection is performed manually. Thus, "the total inspection for the failed lot" needs to be performed by manually on an offline, which is very ineffective. And, "the shape verification step" performed online has much greater advantage obtained by performing an automatic inspection even if the number of the shape verification increases, compared to an inspection performed by manually on an offline. Therefore, according to the present invention, by including the shape verification step, it is possible to omit "the total inspection for the failed lot" being an inefficient operation to be performed offline or, at least, to make a percentage of the total inspection extraordinary small, and thereby it is possible to enhance production efficiency.

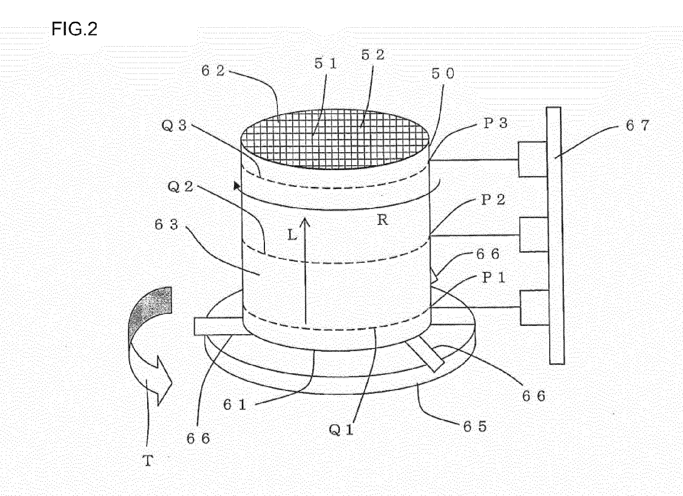

In the method for manufacturing the ceramic honeycomb structure of the present embodiment, the shape verification step A is performed by the following method. Here, Fig. 2 is a perspective view schematically showing an example of a measuring method of the outer shape in the shape verification step. The ceramic honeycomb dried body 50 has an outer wall. Heretofore, the term "outer shape" means a shape of a peripheral surface 63.

Firstly, as shown in Fig. 1 and Fig. 2, take the three positions "apart from each other "in the direction (an axial direction) L from the one end face 61 to another end face 62"" and located on the peripheral surface 63 of the ceramic honeycomb dried body 50 as a measurement start positions P1, P2 and P3, respectively. And, contours in a circumferential direction including the measurement start positions P1, P2, and P3 are measured. Specifically, take respective three portions including the respective measurement start positions P1, P2, and P3 and going around the peripheral surface in circumferential direction R as contour measuring portions Q1, Q2, and Q3. And, as is shown in "A: the shape verification step" of Fig. 1, each of the contours of the contour measuring portions Q1, Q2, and Q3 is measured. Cutting positions in the finish processing are preferably Q1 and Q3. The contour measuring portions Q1, Q2, and Q3 are annular portions going around the peripheral surface 63 of the ceramic honeycomb dried body 50 in the circumferential direction. In Fig. 2, the positions on the peripheral surface where the contours are measured (the contour measuring portions Q1, Q2, and Q3) are shown by three annular dashed lines going around an outer periphery. An effect of the present invention can be sufficiently exerted if three contour measuring portions are chosen, but they may be four portions or more. Here, in "a cross section" nearly perpendicular to a direction in which the cells 52 of the ceramic honeycomb body 50 extend, "the circumferential direction R" means a direction going around a peripheral edge of the "cross section" along the peripheral surface 63 of the honeycomb dried body 50.

And, when a maximum value and a minimum value of the contours measured in the circumferential direction at the contour measuring portions Q1, Q2 and Q3 are in a specified numeric range, it is judged that "the specified conditions are satisfied". Moreover, when the maximum value and the minimum value of the contours measured in the circumferential direction at the contour measuring portions Q1, Q2 and Q3 are out of the specified numeric range, it is judged that "the specified conditions are not satisfied". There is not any special restriction on numeric sizes of the maximum value and the minimum value of the contour. A size of outer diameter can be also calculated from measurement data of positions opposite to each other at 180 degrees in each of the contour measuring portions. Herewith, a standard verification of the size of outer diameter can also be performed.

Here, "the contour" means a size of an actual contour difference from a geometric contour determined by a theoretically correct size. Therefore, the contour to be measured in the method for manufacturing the ceramic honeycomb structure of the present embodiment is the size of the difference of the ceramic honeycomb dried body from a standard size of outer diameter. By measuring such a contour, it is possible to define a dispersion of a line element constituting a curved surface as planar tolerance region in a two-dimensional. That is, it is possible to define the dispersion of the line element constituting an outer peripheral surface of the ceramic honeycomb dried body as planar tolerance region in a two-dimensional. The contour is a value performed at best fit processing (processing to minimize a difference amount from a standard value) with respect to the standard size of outer diameter by processing a minimum square method or the like to measured data. That is, in the shape verification, judgment of acceptance is performed by comparing the contours obtained by individually subjecting the best fit processing to the measured data of Q1, Q2, and Q3 with the specified conditions.

Moreover, "the finished size of the ceramic honeycomb dried body" means a finished size of the ceramic honeycomb dried body derived from the finished size required for the ceramic honeycomb structure as a final product. For example, it is possible to obtain the finished size of the ceramic honeycomb dried body from the finished size required for the ceramic honeycomb structure in consideration of a shrink amount or the like at the time of firing the ceramic honeycomb dried body.

In the shape verification step A, the contours are measured at a plurality of points in the above-mentioned "contour measuring portions Q1, Q2, and Q3", respectively. Moreover, the shape verification step is preferably performed online. "Performed online" means "performed on the production line". That is, the shape verification step is preferably a step incorporated in the production line. It is preferable that an operation to convey the ceramic honeycomb dried body satisfying "the specified conditions" to the next finishing step is automatically performed by a machine or the like. Moreover, when a step of preparing the ceramic honeycomb dried body is performed prior to the shape verification step, it is preferable that the ceramic honeycomb dried body to be prepared is automatically conveyed to the shape verification step by the machine or the like.

Fig. 2 shows an example at the case of measuring a contour while placing the ceramic honeycomb dried body 50 on a measurement table 65 capable of placing an object to be measured horizontally. The ceramic honeycomb dried body 50 is placed on the measurement table 65 at a state that one end face 61 directs downward. Thereby, the one end face 61 is a bottom surface. It is possible to continuously measure the contours of Q1, Q2 and Q3 in the circumferential direction R of the peripheral surface 63 of the ceramic honeycomb dried body 50 by rotating this measurement table 65 in the horizontal plane. At the time of rotating the measurement table 65, it makes the outer periphery (the peripheral surface) of the ceramic honeycomb dried body 50 rotate in a rotating direction T. In Fig. 2, the contours are measured by a laser displacement meter 67. Moreover, spacers 66 are arranged between the measurement table 65 and the one end face 61 of the ceramic honeycomb dried body 50. Since the flatness of each of the end faces 61 and 62 of the honeycomb dried body 50 deteriorates by a cutting and drying operation during forming, there is a possibility that the honeycomb dried body 50 is moved by a centrifugal force at the time of rotating the measurement table 65. In order to acquire a shape measurement precision, it is preferable that the spacers 66 are arranged in three portions.

In the method for manufacturing the ceramic honeycomb structure of the present embodiment, the finishing step B is performed after the shape verification step A. The finishing step B is a step of subjecting the one end face 61 and another end face 62 of the ceramic honeycomb dried body 50 to the finish processing.

The finish processing is performed so that the length of the ceramic honeycomb dried body 50 in "the direction L from the one end face 61 to another end face 62" becomes the finished size. In the finish processing, it is preferable that the end faces of the honeycomb dried body 50 are cut by a grindstone to adjust a uniform length. If necessary, grinding may be performed after the cutting.

In the method for manufacturing the ceramic honeycomb structure of the present embodiment, the firing step C is performed after the finishing step B. The firing step C is a step of firing the finished honeycomb dried body to obtain the ceramic honeycomb structure.

Hereinafter, the method for manufacturing the ceramic honeycomb structure of the present embodiment will be further described in detail.

### (1-1) Preparation of Ceramic Honeycomb Dried Body:

Firstly, there will be described a preparing method of the ceramic honeycomb dried body used in the method for manufacturing the ceramic honeycomb structure of the present embodiment (the ceramic honeycomb dried body preparing step). As to the preparing method of the ceramic honeycomb dried body, there is not limited to the following preparing method. That is, as long as the ceramic honeycomb dried body is the one prior to performing the finish processing so that the length in "the direction L from the one end face 61 to another end face 62" (see Figs. 1 and 2) becomes finished size, there is not any special restriction on the preparing method or the like thereof.

As the preparing method of the ceramic honeycomb dried body, there is a method of preparing a honeycomb formed body by use of a general extrusion-forming method, and drying the obtained honeycomb formed body. The honeycomb formed body is a cylindrical formed body in which a plural number of cells extending from one end face to another end face are defined by partition walls. As the extrusion-forming method, there are an intermittent (ram) extrusion-forming method and a continuous extrusion-forming method. The intermittent extrusion-forming method is a method of kneading a forming raw material containing a ceramic material and a forming auxiliary agent, forming a kneaded clay by a vacuum clay kneader, and then extruding the obtained kneaded clay to prepare the honeycomb formed body. Moreover, the continuous extrusion-forming method is a method of directly forming mixed powder into a kneaded clay, and extruding it to prepare the honeycomb formed body. There is not any special restriction on the ceramic material included in the forming raw material, and it is possible to use a ceramic material used as the forming raw material in a heretofore known method for manufacturing the ceramic honeycomb structure. Examples of the ceramic material include cordierite, a cordierite forming raw material, silicon carbide, and alumina. It is to be noted that the cordierite forming raw material is a ceramic raw material blended so as to obtain a chemical composition in which silica is in a range of 42 to 56 mass%, alumina is in a range of 30 to 45 mass%, and magnesia is in a range of 12 to 16 mass%. The cordierite forming raw material is the one which becomes cordierite by firing. In the extrusion-forming, it is preferable to use a die having a desirable whole shape, cell shape, partition wall thickness, cell density, and the like.

Moreover, the forming raw material contains water becoming a dispersion medium. Furthermore, the forming raw material may contain a pore former, a binder, a dispersant, a surfactant, and the like if necessary. As the pore former, the binder, the dispersant, the surfactant and the like, it is possible to suitably use the ones used in the heretofore known method for manufacturing the ceramic honeycomb structure.

Next, both end portions of the obtained honeycomb formed body are cut. Incidentally, when the honeycomb formed body is cut, it makes the length of each honeycomb formed bodies to be cut in "the direction from the one end face to another end face" long compared with the finished size of the honeycomb structure. A portion of each honeycomb formed body to be cut, which is longer than the finished size, is cut and removed in the finishing step.

Next, it is preferable that the obtained honeycomb formed body is dried to obtain the honeycomb dried body. There is not any special restriction on a drying method, and there is a method including hot air drying, microwave drying, dielectric drying, reduced pressure drying, vacuum drying, and freeze drying and the like. Above all, the dielectric drying, the microwave drying and the hot air drying are preferably performed alone or in combination.

In the ceramic honeycomb dried body obtained in this manner, distortion and an undulation may be generated at the outer periphery at the time of conveying a honeycomb formed body or drying the honeycomb formed body. In the method for manufacturing the ceramic honeycomb structure of the present embodiment, even if the ceramic honeycomb dried body has an undulation face at the outer periphery, the contour can be measured. Therefore, it is possible to judge whether or not the ceramic honeycomb dried body satisfies the specified conditions, and the failed body can beforehand be removed. And thereby, it is possible to omit "the total inspection for the failed lot" to be performed for the honeycomb dried bodies of the same lot as the lot of the honeycomb dried body judged that it "does not satisfy the specified conditions" by the sampling inspection or, at least, to make a percentage of the total inspection (the total inspection percentage) extraordinary small.

### (1-2) Shape verification Step:

In the shape verification step, there is not any special restriction on the measuring method of the contour. For example, the contour can be measured by the laser displacement meter 67 as shown in Fig. 2. As the laser displacement meter 67, a reflective non-contact laser displacement meter can suitably be used. Such a laser displacement meter can measure the contour more accurately with respect to the finished size of the ceramic honeycomb dried body 50.

In the method for manufacturing the ceramic honeycomb structure of the present embodiment, it is preferable that the measurement of the outer shape in the shape verification step is performed by the following method. Firstly, as shown in Fig. 2, there is measured the contour in circumferential direction including the measurement start positions P1, P2, and P3 apart from each other in "the direction L from the one end face 61 to another end face 62" and located on the peripheral surface 63 of the ceramic honeycomb dried body 50. Specifically, as shown in Fig. 2, take respective three portions including the respective measurement start positions P1, P2, and P3 and going around the peripheral surface in the circumferential direction as contour measuring portions Q1, Q2, and Q3. Then, the contours of the ceramic honeycomb dried body at the contour measuring portions Q1, Q2, and Q3 are measured. It is preferable that the portions to be measured are suitably selected in accordance with the specified conditions.

There is not any special restriction on a temperature of the ceramic honeycomb dried body at the time of measuring the shape of the ceramic honeycomb dried body, but the temperature of the ceramic honeycomb dried body is preferably from 20 to 150°C. However, the temperature of the ceramic honeycomb dried body after drying the ceramic honeycomb formed body is from about 50 to 150°C, and it is also possible to measure the contour after cooling this ceramic honeycomb dried body to room temperature once. However, heat efficiency and operation efficiency deteriorate. In the measurement of the contour described above, it is desirable to correct an influence of the temperature for a measurement result. It is desirable that a thermal expansion coefficient of the ceramic honeycomb dried body including the ceramic material and the forming auxiliary agent is beforehand measured, and "a standard size of outer diameter" of the ceramic honeycomb dried body is corrected to "a standard size of outer diameter" corresponding to the temperature. Owing to the correction of "the standard size of outer diameter", it is possible to perform suitable measurement, even if the temperature of the ceramic honeycomb dried body is from 20 to 150°C. That is, it is possible to provide the ceramic honeycomb dried body after drying the ceramic honeycomb formed body with the measurement of the contour immediately. Thereby, the operation efficiency can further be enhanced.

As shown in Fig. 2, it is preferable that the measurement of the contour is performed by placing the ceramic honeycomb dried body 50 on the measurement table 65 capable of placing the object to be measured horizontally. When such a measurement table 65 is used, it is possible to easily measure all the regions in the circumferential direction of the peripheral surface of the ceramic honeycomb dried body 50. That is, it is possible to measure the contours of Q1, Q2 and Q3 of the peripheral surface 63 of the ceramic honeycomb dried body 50 simultaneously and continuously by fixing the laser displacement meter 67 and rotating the measurement table 65 on which the ceramic honeycomb dried body 50 is placed at 360 degrees in the horizontal plane. The laser displacement meter 67 may be movable. There is not any problem in a measuring method in which the laser displacement meter is moved to Q1, Q2, and Q3 every rotation, as long as productivity is not affected. Moreover, such a measuring method can be considered as follows. That is, even if "the direction L from the one end face 61 to another end face 62" of the ceramic honeycomb dried body 50 inclines with respect to a direction orthogonal to the horizontal plane (the vertical direction), the influence of the above inclination is noticeably small at the calculation of the maximum value and minimum value of the contour. Therefore, when the ceramic honeycomb dried body 50 is placed on the measurement table 65, "the direction L from the one end face 61 to another end face 62" of the ceramic honeycomb dried body 50 may slightly incline with respect to the direction orthogonal to the horizontal plane (the vertical direction). In the method for manufacturing the ceramic honeycomb structure of the present embodiment, it is preferable that "a height difference of the inclination of the end face 61 of the ceramic honeycomb dried body 50 with respect to the horizontal plane" (the height difference of the inclination of the end face) is 4 mm or less at the time of placing the ceramic honeycomb dried body 50 on the measurement table 65. Here, the above "height difference of the inclination of the end face" is as follows. The honeycomb dried body 50 is placed on the measurement table 65 so that "the direction L from the one end face 61 to another end face 62" turns in the vertical direction. At this time, a difference between a height of "the highest position in the vertical direction" of the bottom face of the honeycomb dried body 50 from the surface of the measurement table 65 and a height of "the lowest position in the vertical direction" from the surface of the measurement table 65 is "the height difference of the inclination of the end face".

### (1-3) Finishing Step:

As shown in Fig. 1, in the finishing step B, the ceramic honeycomb dried body 50 satisfying the specified conditions is subjected to the finish processing so that the length in "the direction L from the one end face 61 to another end face 62" becomes the finished size m. And thereby, the finished ceramic honeycomb dried body 70 is obtained. The finished ceramic honeycomb dried body 70 is preferably formed so that "both end faces are orthogonal to "the direction L from the one end face 61 to another end face 62"".

### (1-4) Sampling Dimensional Inspection:

After the finishing step (before the firing step), the sampling dimensional inspection may be performed for check. In the sampling dimensional inspection, the outer shape of the finished ceramic honeycomb dried body is measured to check whether or not the specified conditions are satisfied. And, when the finished ceramic honeycomb dried body which does not satisfy the specified conditions is present, the measurement of the outer shape (the total inspection) is performed to all the finished ceramic honeycomb dried bodies of the same lot as the lot of the finished ceramic honeycomb dried body. And, the finished ceramic honeycomb dried body which does not satisfy the specified conditions is removed from the step.

The method for manufacturing the ceramic honeycomb structure of the present embodiment includes the shape verification step prior to the finishing step. Therefore, in the sampling dimensional inspection performed after the finishing step (prior to the firing step), the finished ceramic honeycomb dried bodies which do not satisfy the specified conditions are extremely exceptional.

### (1-5) Firing Step:

In the firing step, the finished ceramic honeycomb dried body is fired to obtain the ceramic honeycomb structure.

When the firing is performed, degreasing is performed to remove the forming auxiliary agent and the like prior to the firing. Afterward, the ceramic honeycomb dried body subjected to the degreasing is fired to form the ceramic honeycomb structure. There is not any special restriction on degreasing conditions. It is preferable that the degreasing is performed on conditions suitable for the forming raw material of the ceramic honeycomb dried body. For example, it is preferable that the degreasing is performed in accordance with an organic material which is the forming auxiliary agent in the forming raw material, and an additive amount. Examples of the above organic material include an organic binder, dispersant and pore former.

The firing means an operation of sintering the forming raw material in the ceramic honeycomb dried body subjected to the degreasing to acquire a predetermined strength. Since firing conditions (temperature and time) vary in accordance with a type of the ceramic forming raw material, suitable conditions may be selected in accordance with the type. The firing temperature is usually, for example, about 1400 to 1600°C, but is not limited to this. When the degreasing and firing are performed, it is preferable that the firing is continuously performed by raising the temperature in continuity after the degreasing. It is to be noted that the degreasing and the firing may be performed in separate steps. The degreasing and firing can be performed by using an electric furnace, a gas furnace, or the like.

### (1-6) Plugging Step:

The method for manufacturing the ceramic honeycomb structure of the present embodiment may further include a plugging step. The plugging step is a step of filling a plugging material into the cells of the finished ceramic honeycomb dried body or the ceramic honeycomb structure. By including such a plugging step, it is possible to manufacture a plugged ceramic honeycomb structure in which plugged portions are arranged in open frontal ends of the cells of the ceramic honeycomb structure. It is preferable that the plugged portions are formed in both the end faces of the ceramic honeycomb structure so that a checkered pattern is formed by the plugged portions and the open frontal areas of the cells.

The plugged ceramic honeycomb structure can be used as a filter to remove impurities in a fluid. Examples of such a filter include a filter for purifying exhaust gas to remove a particulate matter in an exhaust gas. An example of a filter for purifying exhaust gas is a diesel particulate filter to remove the particulate matter in the exhaust gas discharged from a diesel engine.

As the plugging step, it can be performed in conformity to a step similar to a plugging step in the heretofore known method for manufacturing the plugged ceramic honeycomb structure. It is preferable that the plugging step is performed after performing the finishing step or after performing the firing step.

Hereinafter, there will be described an example where the finished ceramic honeycomb dried body subjected to the finishing step is subjected to the plugging step. Firstly, a slurry-like plugging material is filled into one open frontal ends of each predetermined cell and another open frontal ends of each remaining cell of the finished ceramic honeycomb dried body. When the plugging material is filled into the open frontal ends of the cells of the finished ceramic honeycomb dried body, firstly the plugging material is filled into the one open frontal ends, and then the plugging material is filled into another open frontal ends.

As a method of filling the plugging material into the one open frontal ends, there is the following method. Firstly, a sheet is attached to one end face of the finished ceramic honeycomb dried body. Next, this sheet is provided with holes for filling the plugging material. The holes for filling the plugging material correspond to positions where the cells to be provided with the plugged portions are present. The finished ceramic honeycomb dried body attached with the sheet is pressed into a container where the plugging material is stored. That is, an end of the finished ceramic honeycomb dried body attached with the sheet is pressed into the above container. Thereby, the plugging material is filled into the predetermined cells through the holes of the sheet.

After filling the plugging material into the one open frontal ends of each of the cells, the plugging material is filled into another open frontal ends of the cell by a method similar to the above-mentioned method. That is, the sheet is also attached to another end face of the finished ceramic honeycomb dried body in the same manner as in the one end face, and the plugging material is filled by the method similar to the above method.

By drying the plugging material filled into the cells of the finished ceramic honeycomb dried body, the plugged portions can be formed. The cell provided with the plugged portion in the end on one end face side and the cell provided with the plugged portion in the end on another end face side are alternately arranged, to form the checked patterns in both the end faces of the honeycomb structure. Usually, after drying the plugging material filled into the cells, the firing is performed to manufacture the diesel particulate filter.

### Examples

Hereinafter, the present invention will specifically be described with respect to examples, but the present invention is not limited to these examples.

### (Example 1)

Firstly, a ceramic honeycomb dried body for performing a finishing step was prepared. To prepare the ceramic honeycomb dried body, a cordierite forming raw material was used as a ceramic raw material. A predetermined amount of a forming auxiliary agent was added to the cordierite forming raw material, and water was also added, to prepare mixed powder.

Next, the obtained mixed powder was extruded by using a die for forming a ceramic honeycomb formed body. The extrusion-forming was performed by continuous forming, to prepare the cylindrical ceramic honeycomb formed body in which a plural number of cells extending from one end face to another end face are defined. Next, the ceramic honeycomb formed body was cut so that a length in "a direction from the one end face to another end face" was larger than a finished size.

Next, the ceramic honeycomb formed body to be cut was dried, to prepare a ceramic honeycomb dried body. The drying was performed in combination of dielectric drying and hot air drying.

Next as shown in Fig. 2, an obtained ceramic honeycomb dried body 50 was placed on a rotatable measurement table 65 in a horizontal plane. Incidentally, any spacers were not used. There were measured contours of the ceramic honeycomb dried body in each of "contour measuring portions Q1, Q2, and Q3" of a peripheral surface 63 of the ceramic honeycomb dried body 50 (contour measurement). "The contour measuring portions Q1, Q2 and Q3" are "respective portions including three measurement start positions P1, P2 and P3 apart from each other in "a direction L from one end face 61 to another end face 62" and going around in circumferential direction". The contours were continuously measured by a laser displacement meter 67. As the laser displacement meter 67, a reflective non-contact laser displacement meter was used. In the measurement of the contours, 3000 points per one contour measuring portion were measured. That is, the contours were measured at each point on each contour measuring portion of the peripheral surface 63 of the ceramic honeycomb dried body 50 every 0.12° from a measurement standard position (a measurement start position) of the contour. The contour was measured at ordinary temperature (20°C) .

A maximum value and a minimum value of the contour were obtained from an obtained measurement result (a shape verification step).

Next, the ceramic honeycomb dried body was subjected to finish processing so that the length in "the direction L from the one end face 61 to another end face 62" became "the finished size", to obtain a finished ceramic honeycomb dried body (a finishing step). The finish processing was performed by cutting an end face of the ceramic honeycomb dried body by use of a disc-like grindstone.

The finished ceramic honeycomb dried body to be obtained was subjected to the degreasing and was further fired, to manufacture a ceramic honeycomb structure (a firing step). Degreasing and firing were performed under an oxidation atmosphere. The highest temperature at the firing was 1430°C.

A shape (a size) of the ceramic honeycomb structure of Example 1 was as follows. A size of outer diameter was 100 mm. The length in "the direction L from the one end face 61 to another end face 62" was 130 mm. A cell density was 62 cells/cm². A partition wall thickness was 150 µm. Each data of the ceramic honeycomb structure is shown in Table 1.

By such a method (the method of Example 1), ceramic honeycomb structures of 100 lots were manufactured. Incidentally, one lot included 100 structures. Then, the obtained ceramic honeycomb structures were subjected to a sampling inspection. In the sampling inspection, "the contour measurement" was performed similarly to the above method. Then, the same lot as a lot including the ceramic honeycomb structure which did not satisfy the specified conditions was subjected to a total inspection. Here, as "the specified conditions", "the maximum value of the contour was 1 mm or less and the minimum value of the contour was "-1 mm" or more".

Moreover, in the shape verification step of a manufacturing process of each ceramic honeycomb structure, when the maximum value and minimum value of the contour of the ceramic honeycomb dried body did not satisfy the specified conditions, the ceramic honeycomb dried body was removed from the next step (a production line). The contour with respect to the finished size of the ceramic honeycomb dried body was measured and when the maximum value and minimum value of the contour satisfied the specified conditions, the ceramic honeycomb dried body was advanced to the next step (a finishing step), to prepare the honeycomb structure. Here, as "the specified conditions", "the maximum value of the contour was 1 mm or less and the minimum value of the contour was "-1 mm" or more".

A total inspection percentage (%) of the obtained ceramic honeycomb structure was calculated. The obtained result is shown in Table 1. A percentage of the number of lot including the ceramic honeycomb structures subjected to the total inspection with respect to the total number of lot including the obtained ceramic honeycomb structures was the total inspection percentage (%).

**[Table 1]**

| | Finished size | | | | Total inspection percentage (%) |
|---|---|---|---|---|---|
| | Size of Outer diameter (mm) | Length in cell extending direction (mm) | Cell density (cells/cm²) | Partition wall thickness (µm) | |
| Example 1 | 100 | 130 | 62 | 150 | 0.0 |
| Comparative Example 1 | 100 | 130 | 62 | 150 | 1.0 |
| Example 2 | 150 | 200 | 62 | 150 | 0.0 |
| Comparative Example 2 | 150 | 200 | 62 | 150 | 16 |
| Example 3 | 300 | 200 | 62 | 150 | 0.0 |
| Comparative Example 3 | 300 | 200 | 62 | 150 | 54 |
| Example 4 | 100 | 130 | 62 | 150 | 0.0 |
| Example 5 | 100 | 130 | 62 | 150 | 0.0 |

### (Examples 2 and 3)

A ceramic honeycomb dried body whose finished size had a value shown in Table 1 was prepared, and a ceramic honeycomb structure was manufactured by a method similar to Example 1. A total inspection percentage was obtained by a method similar to Example 1. The result is shown in Table 1.

### (Example 4)

A ceramic honeycomb structure was manufactured similarly to Example 1, except that spacers were arranged in three portions between a ceramic honeycomb dried body and a measurement stand as shown in Fig. 2. A total inspection percentage was obtained by a method similar to Example 1. The result is shown in Table 1.

### (Example 5)

A ceramic honeycomb structure was manufactured similarly to Example 4, except that measurement of a contour was performed at 120°C. A total inspection percentage was obtained by a method similar to Example 1. The result is shown in Table 1.

### (Comparative Examples 1 to 3)

A ceramic honeycomb structure was manufactured similarly to Example 1, except that "a ceramic honeycomb dried body including each data having a value shown in Table 1 was prepared, and a shape verification step was not performed". A total inspection percentage was obtained by a method similar to Example 1. The result is shown in Table 1.

It is seen that according to the manufacturing methods of Examples 1 to 3, a total inspection percentage remarkably decreases as compared with the manufacturing methods of the Comparative Examples 1 to 3. This is because in the manufacturing methods of Examples 1 to 3, the ceramic honeycomb dried bodies which did not satisfy the specified conditions were removed in a shape verification step, "any honeycomb structures which did not satisfy the specified conditions" were not detected in a honeycomb structure inspection. In the manufacturing methods of Examples 1 to 3, since "the shape verification step" can be continuously performed online (on a production line), the shape verification was able to be effectively performed. In contrast, "the total inspection for the failed lot" was needed to be performed manually offline because the total inspection was not on an automatic inspection line, which was very ineffective. Thus, "the shape verification step" performed online which is inevitably performed in the manufacturing step of the honeycomb structure had much greater advantage obtained by performing an automatic measurement, compared to an inspection performed manually offline.

### Industrial Applicability

A method for manufacturing a ceramic honeycomb structure of the present invention can be utilized in a method for manufacturing the ceramic honeycomb structure utilized as a support for a catalyst device, a filter for purifying exhaust gas or the like.

### Description of Reference Marks

50: ceramic honeycomb dried body, 51: partition wall, 52: cell, 61: one end face, 62: another end face, 63: peripheral surface, 65: measurement table, 66: spacer, 67: laser displacement meter, 70: finished ceramic honeycomb dried body, 100: ceramic honeycomb structure, A: shape verification step, B: finishing step, C: firing step, L: direction (an axial direction) from one end face to another end face, m: finished size, P1, P2 and P3: measurement start position, Q1, Q2 and Q3: contour measuring portion, and T: rotating direction.

## Claims

1. A method for manufacturing a ceramic honeycomb structure comprising:
a shape verification step of measuring an outer shape of a ceramic honeycomb dried body in which a plurality of cells extending from one end face to another end face are defined by partition walls, to remove the ceramic honeycomb dried body which does not satisfy specified conditions;
a finishing step of subjecting the ceramic honeycomb dried body satisfying the specified conditions to finish processing so that a length of the ceramic honeycomb dried body in a direction from the one end face to another end face becomes a finished size, to obtain a finished ceramic honeycomb dried body; and
a firing step of firing the finished ceramic honeycomb dried body to obtain the ceramic honeycomb structure.

2. A method for manufacturing a ceramic honeycomb structure according to claim 1,
wherein a measurement of the outer shape in the shape verification step is performed by measuring a contour in a circumferential direction including at least three measurement start positions apart from each other in the direction from the one end face to another end face and located on a peripheral surface of the ceramic honeycomb dried body.

3. A method for manufacturing a ceramic honeycomb structure according to claim 2,
wherein the contour is measured by placing the ceramic honeycomb dried body on a measurement table so that the one end face is a bottom surface.

4. A method for manufacturing a ceramic honeycomb structure according to claim 3,
wherein spacers are arranged in at least three portions between the ceramic honeycomb dried body and the measurement table.

5. A method for manufacturing a ceramic honeycomb structure according to claim 3 or 4,
wherein a height difference of an inclination of the bottom face of the ceramic honeycomb dried body with respect to a horizontal plane is 4 mm or less at the time of placing the ceramic honeycomb dried body on the measurement table.

6. A method for manufacturing a ceramic honeycomb structure according to any one of claims 2 to 5,
wherein the contour is measured by a reflective non-contact laser displacement meter.

7. A method for manufacturing a ceramic honeycomb structure according to any one of claims 1 to 6,
wherein a temperature of the ceramic honeycomb dried body at the time of measuring the outer shape is from 20 to 150°C.

8. A method for manufacturing a ceramic honeycomb structure according to any one of claims 1 to 7,
wherein the ceramic honeycomb dried body has an undulation on a peripheral surface.

9. A method for manufacturing a ceramic honeycomb structure according to any one of claims 1 to 8,
wherein a size of outer diameter of the ceramic honeycomb dried body is 100 mm or more.

10. A method for manufacturing a ceramic honeycomb structure according to any one of claims 1 to 9,
wherein the ceramic honeycomb dried body is made of a forming raw material including at least one selected from a group consisting of cordierite, silicon carbide, and alumina.

11. A method for manufacturing a ceramic honeycomb structure according to any one of claims 1 to 10,
further comprising a plugging step of filling a plugging material into ends of the cells of the finished ceramic honeycomb dried body or the ceramic honeycomb structure.
